(19) Europäisches Patentamt
European Patent Office
Office européen des brevets

(11) **EP 3 503 455 B1**

(12) **FASCICULE DE BREVET EUROPEEN**

(45) Date de publication et mention de la délivrance du brevet:
**17.02.2021 Bulletin 2021/07**

(51) Int Cl.:
***H04L 5/00*** *(2006.01)*

(21) Numéro de dépôt: **18215502.8**

(22) Date de dépôt: **21.12.2018**

(54) **PROCEDE ET DISPOSITIF D'ALLOCATION DE CANAUX**

VERFAHREN UND VORRICHTUNG ZUR KANALZUORDNUNG

METHOD AND DEVICE FOR ALLOCATING CHANNELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1701351**

(43) Date de publication de la demande:
**26.06.2019 Bulletin 2019/26**

(73) Titulaire: **Thales**
**92400 Courbevoie (FR)**

(72) Inventeurs:
• **SIRVEN, François**
**92230 GENNEVILLIERS (FR)**
• **GARRIDO, Eric**
**92230 GENNEVILLIERS (FR)**
• **PREST, Thomas**
**92230 GENNEVILLIERS (FR)**

(74) Mandataire: **Marks & Clerk France**
**Immeuble "Visium"**
**22, avenue Aristide Briand**
**94117 Arcueil Cedex (FR)**

(56) Documents cités:
**US-A1- 2016 094 244**

• **ZHANG HONGLIANG ET AL: "Radio Resource Allocation for Device-to-Device Underlay Communication Using Hypergraph Theory", IEEE TRANSACTIONS ON WIRELESS COMMUNICATIONS, IEEE SERVICE CENTER, PISCATAWAY, NJ, US, vol. 15, no. 7, 1 juillet 2016 (2016-07-01), pages 4852-4861, XP011616502, ISSN: 1536-1276, DOI: 10.1109/TWC.2016.2547862 [extrait le 2016-07-08]**

# Description

L'invention concerne notamment un procédé et un dispositif permettant d'allouer de manière optimale des canaux pour le partage de données entre plusieurs utilisateurs. Elle s'applique lorsque les utilisateurs sont des postes radios souhaitant échanger leurs positions, par exemple dans un système de communication. Elle trouve son application pour le partage récurrent d'informations entre utilisateurs, en minimisant la période de rafraîchissement correspondant à plusieurs sessions successives assurant que chaque utilisateur $U_i$ puisse communiquer au moins une fois avec chacun des autres utilisateurs $U_j$.

Pendant une période - dite de rafraîchissement - la plus petite possible, chaque utilisateur doit pouvoir communiquer à tous les autres utilisateurs une donnée personnelle, par exemple, sa position courante. Quand l'environnement des utilisateurs est peu dense, lorsque deux utilisateurs sont en visibilité radio, la solution déterministe la plus simple et la plus efficace consiste à ce que chacun transmette tour à tour sa position. Il est aussi possible d'envisager des émissions rapprochées qui provoqueraient du brouillage en environnement dense et qui auraient une période de rafraîchissement plus courte. La période totale de transmission est égale au nombre d'utilisateurs multiplié par la durée d'un créneau temporel ou slot de transmission. L'expression « visibilité ou en portée radio » signifie qu'un utilisateur est visible au sens radio et qu'il peut échanger des informations avec un autre utilisateur.

Dans un contexte dense d'utilisateurs, de nombreux utilisateurs sont en portée radio les uns des autres. Il est alors intéressant d'envisager un relayage coopératif où les utilisateurs transmettent, en plus de leur position, la position des utilisateurs qu'ils ont entendu précédemment, avec lesquels ils ont pu échanger des données. Dans l'optique d'un relayage coopératif, la transmission successive sur un seul canal logique n'est pas pertinente car les utilisateurs, s'ils sont en portée radio, reçoivent les mêmes informations simultanément. Ils ont donc peu ou pas d'informations utiles à transmettre en plus de leur position.

La description qui suit fera appel aux termes définis ci-après. Les **N** utilisateurs émettent et écoutent selon un schéma périodique. La période de ce schéma correspond à une trame ou une période. Les utilisateurs émettent sur **C** canaux logiques et écoutent les autres utilisateurs utilisant le même canal logique. Les utilisateurs d'un même canal logique émettent successivement sur le canal logique. Les allocations des canaux logiques aux utilisateurs sont modifiées plusieurs fois sur la durée de la trame. On appelle une session, la période pendant laquelle les utilisateurs restent affectés au même canal logique. Les différentes sessions constituant la trame peuvent être de durées différentes. Une période de rafraîchissement est définie comme le cumul des durées des t sessions successives pour assurer que chaque uti-lisateur $U_i$ puisse communiquer au moins une fois avec chacun des autres utilisateurs $U_j$ sa donnée personnelle.

Pour un cas de doublet particulier, utilisateur, canal, (N, C), il est possible de chercher une solution spécifique en utilisant un solveur pour satisfaire au mieux la contrainte de minimisation de la période de rafraîchissement. On constate que des petites variations sur les paramètres N, C, n (n est de l'ordre de N/C) peuvent accroître considérablement la période minimale trouvée. L'un des objectifs est que le minimum atteint observé reste systématiquement proche de la borne théorique t* « combinatoire », i.e. le plus petit t tel que :

$$t \, C \, n(n-1)/2 \; >= \; N(N-1)/2.$$

ie

$$t^* \; >\tilde{} \; N^2/(n^2 \, C).$$

Une méthode connue consiste à utiliser une règle d'affectation pseudo aléatoire (i.e. tirer des partitions en groupe de n usagers « au hasard » à chaque session). Cette méthode présente l'inconvénient de connecter plusieurs fois les mêmes abonnés au cours des sessions successives constituant la période, et peut laisser au contraire un reliquat de couples d'abonnés sans connexion, qu'il faudra traiter par une ou plusieurs sessions complémentaires particulières. De plus, cette solution est toujours loin de l'optimal désiré.

Pour une session, le nombre de paires {i,j} d'utilisateurs connectés (i.e. Ui, Uj sont affectés au même canal) est : C n(n-1)/2.

Dans une session, une paire est donc connectée avec la probabilité :

$$p = C \, n(n-1)/2 \,/( \, N(N-1)/2) \sim C \, (n/N)^2.$$

Après t sessions, le nombre de paires toujours non connectées est donc de l'ordre de :

$$(1-p)^t \, N \, (N-1)/2 \sim (1 - C \, (n/N)^2)^t \, N^2/2.$$

L'ordre de grandeur de t pour que le nombre de paires toujours non connectées après t sessions soit proche de 0 est donc tel que :

$$t \, \ln((1 - C \, (n/N)^2) + \ln(N^2/2) = \ln(1).$$

Soit encore, sous l'hypothèse $\varepsilon = C \, (n/N)^2 \ll 1$ :

$$-t\,C\,(n/N)^2 + \ln(N^2/2) = 0$$

$$t >\sim \ln(N^2/2)\, t^*.$$

Le facteur multiplicatif « $\ln(N^2/2)$ » (typique du problème classique du « collecteur de coupons ») de la période de rafraîchissement de la solution « pseudo aléatoire » par rapport à la borne minimale t* n'est pas négligeable. L'un des objectifs de l'invention est de proposer une nouvelle approche permettant d'allouer de manière optimale des canaux logiques de transmission, en faisant en sorte que deux utilisateurs quelconques appartenant à un réseau se voient au moins une fois sur la période de la trame et que, sur la durée d'une trame, deux utilisateurs quelconques soient affectés au moins une fois au même canal logique pendant une même session.

La demande de brevet US 2016/0094244 divulgue un procédé et un dispositif pour allouer des ressources dans un réseau. Le procédé utilise une première matrice correspondant à un nombre prédéterminé, une seconde matrice d'allocation, les nombres alloués aux cellules de la deuxième matrice sont tels que la somme des nombres considérés dans chacune des rangées, des colonnes, des diagonales ou des « anti-diagonales » est la même.

Le document de Zhang Hongliang et al intitulé « Radio Resource Allocation for Device-to-Device Underlay Communication Using Hypergraph Theory », IEEE Transactions on Wireless Communications, XP 011616502, divulgue un procédé d'allocation de ressources dans les dispositifs D2D en utilisant la théorie hypergraphe pour coordonner l'interférence entre les couples D2D et les cellules des équipements utilisateurs.

L'invention est définie par les revendications annexées.

D'autres caractéristiques et avantages de la présente invention apparaîtront mieux à la lecture de la description d'exemples de réalisation annexée des figures qui représentent :

- Figure 1, un exemple d'architecture d'un réseau de communication comportant plusieurs utilisateurs,
- Figure 2, un schéma de la construction de matrices d'allocation des canaux pour la durée d'une trame,
- Figure 3 et figure 4, deux exemples chiffrés de matrices.

Afin de mieux faire comprendre le procédé selon l'invention, la description qui suit est donnée pour un réseau comportant plusieurs utilisateurs qui sont des postes radios et qui vont chercher à échanger leurs positions, cette dernière pouvant varier dans le temps.

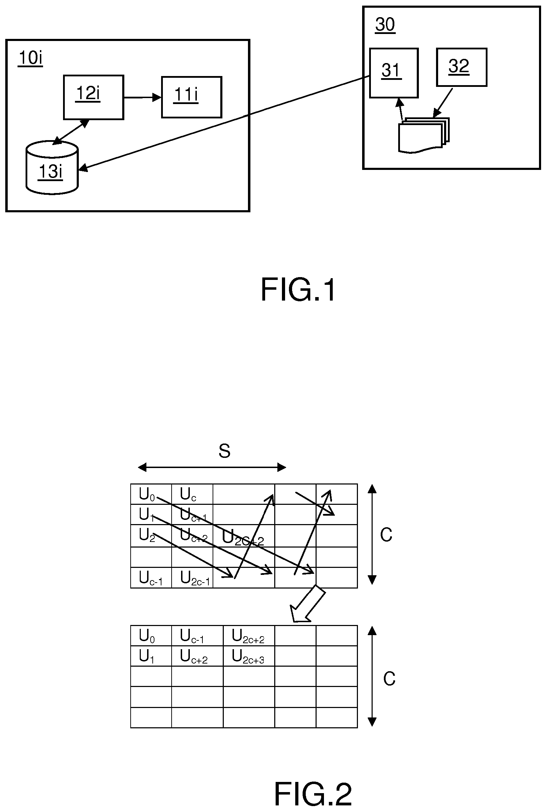

La figure 1 schématise un réseau comprenant plusieurs postes radios. Chaque poste radio 10i est équipé d'un dispositif émetteur/récepteur 11i, d'un processeur 12i, d'une base de données 13i mémorisant les matrices d'allocation des canaux pour un utilisateur, pour un slot de transmission, les matrices étant définies comme il va être détaillé ci-après. Les matrices seront utilisées pour déterminer les instants d'émission/réception et les canaux d'émission/réception de chaque poste radio. Sur la figure 1 on a aussi représenté un dispositif 30 comprenant un processeur 31 configuré pour exécuter les étapes du procédé selon l'invention, une base de données 32 dans laquelle sont mémorisés les paramètres pour configurer le réseau. Le dispositif 30 va générer des matrices d'allocation de canaux qui seront chargées dans chaque poste radio selon des techniques connues de l'homme du métier et qui permettront une allocation optimale des canaux pour les postes radios.

Sans sortir du cadre de l'invention, on pourrait imaginer générer ces matrices en cours de fonctionnement du système, en tenant compte par exemple de l'évolution possible de canaux de communication à allouer et/ou d'un nombre d'utilisateurs susceptibles de varier dans le temps. Dans ce cas, les postes radios sont configurés pour réaliser les calculs. Les utilisateurs changent de trame d'émission/réception simultanément car la trame est globale.

Les matrices comportent les informations suivantes : la référence d'un poste radio, ou d'un ensemble de postes radios, le canal attribué à un poste ou un ensemble pour un slot donné d'une session. Ces informations pourraient être regroupées dans un format autre que celui d'une matrice, sans sortir du cadre de l'invention.

Une matrice d'allocation des canaux comporte C lignes représentant les canaux de transmission, S colonnes correspondant au nombre de créneaux temporels ou slots d'une session. Un élément d'une matrice correspond à l'identifiant d'un utilisateur ou d'un groupe d'utilisateurs connectés à un canal Ci pour un slot Si donné.

Au démarrage, pour générer les matrices d'allocation, on dispose des paramètres suivants :

- Le nombre de postes radios utilisateurs : N,
- Le nombre de canaux de communications : C.

Le paramètre n représentant les utilisateurs abonnés à un canal peut changer d'une session à une autre, au cours de la période. Il peut aussi varier suivant les canaux logiques, pour une même session. En pratique, on choisira pour n la plus grande valeur possible, i.e., de l'ordre de N/C, car un même utilisateur ne peut être affecté qu'à un seul canal logique. Si N n'est pas multiple de C, le paramètre n varie suivant le canal considéré. Par souci de simplicité, le paramètre n n'est pas indicé par le numéro de canal. La durée de la session fait intervenir la plus grande valeur de n en considérant tous les canaux. Pendant une session élémentaire, session de communication et échange des données,

- Un utilisateur est en émission ou en écoute uniquement sur le canal sur lequel il est affecté,
- Les utilisateurs connectés sur le même canal pendant la session, partagent leurs données personnelles, par exemple par une procédure radio classique du type TDMA (Time Division Multiple Access),
- Les C canaux sont utilisés en parallèle par des sous-groupes de n abonnés disjoints.

A chaque session, le procédé re-sélectionne spécifiquement les sous-groupes affectés à chaque canal.

La période de rafraîchissement est le cumul des durées des t sessions successives pour assurer que chaque utilisateur $U_i$ puisse communiquer au moins une fois avec chacun des autres utilisateurs $U_j$ sa donnée personnelle. Soit encore pour que la condition ci-dessous soit satisfaite : pour chaque paire d'utilisateurs $\{U_i, U_j\}$, $U_i$ et $U_j$ sont au moins une fois connectés sur le même canal pendant une session de la période.

L'affectation de chaque utilisateur à chaque canal se fait session par session.
Pendant une session :

- Les C canaux sont utilisés en parallèle,
- Un canal permet de connecter au plus n abonnés parmi les N,
- Les abonnés « connectés » sur un canal donné pendant la session n'interviennent pas sur les autres canaux activés pendant la session.

On peut décrire une solution optimale pour certaines valeurs des paramètres C et N.

- $N=C^2$,
- C est égal au cardinal d'un corps fini.

Dans ce cas on a aussi n=C et donc $N=n^2$.
On définit une borne inférieure égale à n+1, sur le nombre de sessions successives à exécuter pour que chaque émetteur puisse communiquer au moins une fois avec tous les $n^2$-1 autres utilisateurs. En effet, un utilisateur émetteur est en relation avec n-1 autres émetteurs à chaque session. Après k sessions, au mieux, il a communiqué au moins une fois avec k(n-1) autres émetteurs. Donc pour être en relation avec tous, il faut au minimum n+1 sessions ($n^2$-1 = (n+1)(n-1)).

Afin d'atteindre cette condition, on choisit n égal au cardinal d'un corps fini $F_q$. Ceci permet d'organiser les émissions sur chaque canal pour que tous les $n^2$ émetteurs soient connectés avec les autres au moins une fois pendant une période de t = n+1 sessions.

Le procédé permettant de générer des matrices d'allocation de canaux, selon l'invention, fait appel au corps fini pour définir une allocation physique de canaux logiques à plusieurs utilisateurs ou groupes d'utilisateurs pendant une session de transmission composée de plusieurs créneaux temporels. Les paramètres d'allocation de canaux pour les utilisateurs sur une trame donnée seront stockés dans une mémoire d'un poste radio et appelés pour le fonctionnement du poste.

Une première étape consiste à choisir le nombre de canaux C tel que $C \geq \sqrt{N}$ et le nombre de canaux C est égal à une puissance d'un nombre premier (C est donc le cardinal d'un corps fini).

Une première variante pour générer les paramètres d'allocation consiste à générer C matrices à partir d'une première matrice, en utilisant des droites de pentes variables pour parcourir la matrice.

On considère n = q = C = cardinal d'un corps fini $F_q$ (i.e. q = $p^k$ avec p nombre premier, et $k \geq 1$).

Chaque utilisateur Ui au nombre de N = $q^2$ est considéré comme un point (x,y) d'un plan E = $F_q$ x $F_q$. Sur E, on appelle « droite » un ensemble de points (x,y) dont les coordonnées vérifient une relation affine du type :

$$\text{droite} = \{ (x,y), \text{ tel que } ax + by + c = 0\}.$$

Sur E, n classe les droites par « pente » :

- Pour chaque « a » de $F_q$, il y a q droites de pente « a » de la forme :

$$\{(x,y), y = ax+b\}$$

- A cela, il faut rajouter les q droites de pente « infinie » :

$$\{(x,y), \ x = b\}$$

Le nombre de droites sur le plan ($F_q$ x $F_q$) est donc : $q^2$+q. On vérifie facilement que :

a) Chaque droite comprend q points (x,y),
b) Deux droites distinctes de même pente ne se coupent pas (pas d'intersection),
c) Deux droites de pentes distinctes se coupent toujours, et en un seul point,
d) Deux points distincts quelconques appartiennent à une seule droite.

En particulier, pour chaque pente « a » (a dans $F_q$, ou « infini ») les q droites de même pente « a » forment une partition du plan E = $F_q$ X $F_q$ (puisqu'elles sont d'intersection vide, de cardinal q et au nombre de q, leur union inclut bien les q*q = $q^2$ points de E).

Le procédé en déduit une affectation optimale des émetteurs sur les C = q canaux en t = (q+1) sessions.

1) A chaque utilisateur est associé de manière bijective un point (x,y) du plan E,
2) A chaque session k, 0 <= k < q+1, est associée de manière bijective une pente a(k) de Fq U {infini},

3) A chaque canal 0 <= i < q, est associé de manière bijective un paramètre b(i) dans Fq,

4) Règle d'affectation : Le canal i dans la session k est affecté aux q utilisateurs dont les coordonnées (x,y) sont les q points d'une droite spécifique de pente a(k),

c'est-à-dire plus précisément :

- si a(k) <> infini, {(x,y) dans E, y = a(k) x + b(i)}
- si a(k) = infini, {(x,y) dans E , x = b(i)}

Avec cette affectation, chaque utilisateur est connecté une fois et une seule fois avec un autre pendant les t = q+1 sessions. En effet, les q+1= sessions utilisent toutes les (q²+q) droites possibles, et par deux points ne passe qu'une seule droite.

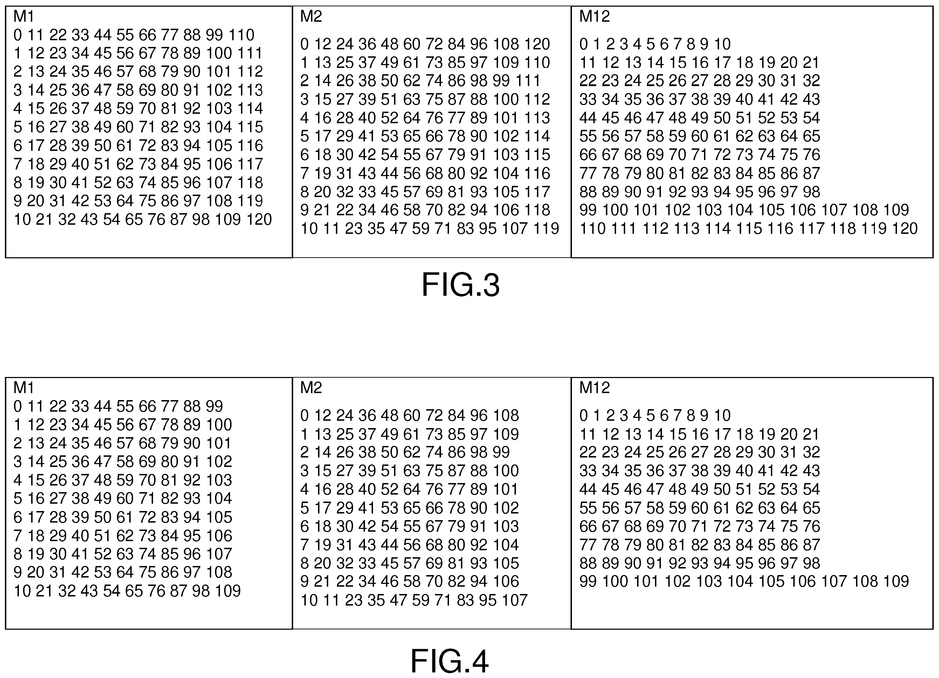

Cette affectation est illustrée en figure 2 sur laquelle on a représenté deux matrices d'allocation de canaux où les colonnes correspondent à un slot, les lignes à des canaux à allouer, et le contenu de la matrice le numéro d'un utilisateur ou d'un groupe d'utilisateurs, couple, triplet, par exemple. La première matrice M1 correspond à une droite de pente nulle (matrice de référence). La deuxième matrice M2 a été générée en parcourant la première matrice avec une droite de pente non nulle (pente 1). La figure 3 représente un exemple chiffré dans lequel on a représenté pour des soucis de clarté uniquement trois matrices, sur les douze. La troisième matrice M12 est générée avec une pente infinie. Le procédé génère ainsi C+1 matrices d'allocation de canaux pour les utilisateurs.

Cette variante de construction des matrices d'allocation de canaux est définie pour les cas de doublets (N, C) de la forme (q², q) où q est le cardinal d'un corps fini (i.e., un nombre de la forme $p^k$, p premier, k >= 1).

Selon une variante de réalisation, pour s'adapter aux cas où le nombre d'utilisateurs et/ou le nombre de canaux n'est pas idéal, deux techniques vont être explicitées.

La première technique permet de s'adapter à un nombre d'utilisateurs qui n'est pas égal au carré du cardinal d'un corps fini. On considère que le nombre d'utilisateurs est égal à N. Soit q le plus petit nombre adéquat (cardinal corps fini) tel que q²≥N (et q² est différent N).

Le principe est de considérer q²=N'>N utilisateurs pour la loi d'affectation et avec q²-N utilisateurs qui sont inactifs (ou virtuels). Si rien n'est optimisé, la période de la transmission complète est q*(q+1), si on considère qu'une session de q utilisateurs a une durée égale à q. Il est possible, si N est sensiblement inférieur à q², d'optimiser la durée.

Pour cela, si on a au moins k*q (k>=1) utilisateurs inactifs (i.e. : q². k*q ≥ N > q²- (k+1)*q), on choisit de façon optimale les utilisateurs inactifs pour diminuer la période totale. Pour cela, on affecte sur une même session (la dernière), les k*q utilisateurs inactifs à k canaux logiques. Ces canaux logiques ne contiennent que ces k*q utilisateurs inactifs. Cela revient à choisir, comme utilisateurs inactifs, des utilisateurs se trouvant sur le même canal logique lors de la dernière session de la période.

Les q autres sessions contiennent au plus q-k utilisateurs par canal logique (les utilisateurs d'un canal logique sur une session se répartissent sur tous les canaux logiques pour chacune des autres sessions), ce qui permet de diminuer de k la durée des autres sessions. La durée de trame (ou période) est donc de q+q*(q-k)=q*(q-k+1).

Un exemple chiffré est donné ci-après. Soit N=110 utilisateurs, on prend q=11. q²=121. Il y a 11 canaux inactifs. On prend une loi sur les canaux logiques aboutissant à 12 sessions de taille 11. Sur une session (par exemple la dernière), les utilisateurs du dernier canal logique sont inactifs. Les autres sessions n'ont que 10 utilisateurs pour chaque canal logique et ont donc une durée réduite à 10. La durée de la période peut donc être réduite à 10 pour chacune des 11 premières sessions et 11 pour la dernière session soit 121 (au lieu de 132). La figure 4 indique les matrices correspondant à cette solution (seules 3 des matrices ont été représentées : les deux premières et la dernière). On gagne donc sur la durée de la période à chaque fois qu'il y a un multiple de 11 utilisateurs inactifs. Le gain se fait donc par palier (on aurait eu la même période totale avec 100 utilisateurs). Cela revient à considérer les utilisateurs 0 à 109 sur la figure 3 : pour les 11 premières matrices, les lignes sont de longueur 10.

Une seconde technique permet de s'adapter dans le cas où le nombre de canaux logiques disponibles est insuffisant. On a q canaux logiques disponibles et le nombre d'utilisateurs est N>q². On peut regrouper les utilisateurs en groupes d'au plus k utilisateurs tels que (k-1)*q²<N<=k*q².

On considère le cas où le nombre d'utilisateur est de la forme N=k*q². On a donc les groupes d'utilisateurs GrU$_0$={U$_0$, Uq², ..., U$_{(k-1)*q^2}$}; GrU$_F${U$_1$, Uq²$_{+1}$, ..., U$_{(k-1)*q^2+1}$} ;... ; GrU$_i$={U$_i$, Uq²$_{+i}$, ..., U$_{(k-1)*q^2+i}$} ;... Il y a M=N/k=q² groupes d'utilisateurs.

On applique la construction algébrique sur les M groupes d'utilisateurs identique à celle utilisée pour M utilisateurs élémentaires (les utilisateurs d'un même groupe transmettent successivement sur le même canal logique pour toutes les sessions).

On a donc q+1 sessions. Sur chaque session, il y a q canaux en parallèle. Sur chaque canal de chaque session, q groupes de k utilisateurs (soit k*q utilisateurs) échangent des informations. Les utilisateurs se trouvant dans un même groupe échangent donc leurs positions à chaque session. La durée totale de la période de transmission est égale à (q+1)*q*k.

L'exemple chiffré qui suit, pour N=242, q=11, permet de mieux comprendre cette variante. On forme 121 groupes de deux utilisateurs. On a 12 matrices de taille 11*11 de groupes d'utilisateurs. Soit 12 matrices de taille 11*22 (11 en dimension canal, 22 en dimension nombre d'utilisateurs et donc ressource temporelle). Cela donne une taille totale de trame de 12*22=264.

Les deux techniques peuvent être combinées. Il s'agit de traiter le cas où N est supérieur à $q^2$ mais pour lequel il n'existe pas d'entier k tel que N=k*$q^2$.

On choisit k tel que $(k-1)*q^2<N<k*q^2$.

On constitue la loi d'affectation des canaux logiques aux $q^2$ groupes d'utilisateurs. On a donc q+1 sessions. A chaque session, q canaux logiques contiennent chacun q groupes d'utilisateurs. Si aucune optimisation n'est faite sur la position des utilisateurs inactifs, la période totale est égale à (q+1)*q*k.

Si le nombre d'utilisateurs inactifs est supérieur ou égal à q, le choix des utilisateurs inactifs permet de diminuer la période totale de la transmission.

Si q utilisateurs sont inactifs, les q utilisateurs inactifs sont positionnés sur un même canal logique de la première session, à raison d'un utilisateur inactif par groupe d'utilisateur. Cela signifie que la taille des groupes d'utilisateurs est réduite de 1 pour cette session particulière. Pour chacune des sessions suivantes, un des groupes d'utilisateurs de la session a une taille réduite de 1 et la durée de la session est réduite de 1.

La durée totale de la période devient : k*q*(q+1)-q.

Si le nombre d'utilisateurs inactifs est un multiple de q (m*q), les m*q utilisateurs inactifs sont positionnés sur m canaux logiques de la première session. Cela signifie que la taille des groupes d'utilisateurs est réduite de 1 pour tous les groupes appartenant à m canaux logiques de la première session. Pour chacune des sessions suivantes, la taille cumulée des groupes d'utilisateurs des sessions est réduite de m et la durée de la session est réduite de m. La durée totale de la période devient : k*q*(q+1)-q*m.

Un exemple chiffré est donné, pour N=220 utilisateurs, q=11 canaux logiques disponibles. On traite le cas q=11, $q^2$=121. On a N=2*$q^2$-22. Donc k=2 et m=2. On forme 121 groupes de deux utilisateurs (242 utilisateurs dont 22 utilisateurs inactifs à positionner). On a 12 matrices de taille 11*11 de groupes d'utilisateurs. Soit 12 matrices de taille 11*22 (11 en dimension canal, 22 en dimension temporelle) d'utilisateurs. Cela donne une taille totale de 12*22=264. On positionne les utilisateurs inactifs sur deux canaux logiques de la première session, à raison d'un utilisateur inactif pour chaque groupe de ces deux canaux.

Il y a donc, pour la première session 9 canaux logiques « complets » ayant des groupes de taille 2 et deux canaux logiques de taille réduite ayant des groupes de taille 1.

Pour les 11 sessions suivantes chaque canal logique contient exactement neuf groupes de taille 2 et deux groupes de taille 1. La période de la session est donc 2*9+2=20.

La période totale est donc égale à 22+11*20=242.

L'invention présente, d'une part, une façon optimale d'allouer les sessions et les canaux logiques aux utilisateurs, pour certaines valeurs du nombre d'utilisateurs et du nombre de canaux logiques disponibles. L'invention présente, d'autre part, des méthodes permettant de traiter toutes les valeurs du nombre d'utilisateurs et du nombre de canaux logiques disponibles, en se ramenant à une des solutions optimales. La dégradation par rapport à la solution optimale reste très limitée et la solution obtenue est donc performante.

## Revendications

1. Procédé pour allouer des canaux logiques de communication à N utilisateurs dans un réseau, comportant au moins les étapes suivantes :

   a) définir un premier ensemble d'allocation composé des triplets suivants (numéro de canal, numéro de slot, utilisateur attribué à un canal pour un slot donné) représentant l'allocation de C canaux de communication, pour les N utilisateurs, sur une première session temporelle composée de plusieurs créneaux temporels, avec le nombre C de canaux de communication égal à la racine carrée du nombre d'utilisateurs N et C égal au cardinal d'un corps fini,
   b) générer à partir du premier ensemble d'allocation des canaux, C autres matrices, chaque matrice décrivant l'allocation des utilisateurs aux canaux de communication pendant une session, lesdites C matrices d'allocation étant générées en utilisant une fonction configurée pour que chaque utilisateur soit en communication avec chacun des autres N-1 utilisateurs au moins une fois pendant la trame regroupant les C+1 sessions, la communication ayant effectivement lieu si les utilisateurs sont à portée de communication.

2. Procédé selon la revendication 1 **caractérisé en ce que** l'ensemble d'allocation se présente sous la forme d'une matrice et **en ce que** la génération d'une matrice d'allocation à partir de la première matrice d'allocation est obtenue en parcourant les colonnes et les lignes de la matrice en utilisant des droites de pentes variables.

3. Procédé selon l'une des revendications 1 ou 2 **caractérisé en ce que** dans le cas où la relation $C = \sqrt{N}$ n'est pas vérifiée, on choisit un nombre d'utilisateurs inactifs et on se ramène à traiter N'>N utilisateurs, actifs ou inactifs, avec $C = \sqrt{N'}$ et on optimise la position des utilisateurs inactifs pour minimiser la taille de la trame.

**4.** Procédé selon l'une des revendications 1 à 3 **caractérisé en ce que** dans le cas où le nombre de canaux disponibles est inférieur à la racine carré du nombre d'utilisateurs, on regroupe les utilisateurs en sous-groupes d'au plus k utilisateurs avec $(k-1)*q^2 < N <= k*q^2$ où q est le nombre de canaux disponibles.

**5.** Procédé selon la revendication 4 **caractérisé en ce qu'**un groupe d'utilisateurs est composé de plusieurs sous-ensembles d'utilisateurs, tels que des couples, des triplets et/ou des utilisateurs seuls.

**6.** Procédé pour le partage de données entre plusieurs utilisateurs comprenant l'étape d'allocation des canaux de communication selon l'une des revendications 1 à 5 et une étape où les utilisateurs s'échangent leurs positions et les positions de leurs voisins en portée radio.

**7.** Procédé selon la revendication 6 **caractérisé en ce que** les utilisateurs sont des postes radios.

**8.** Dispositif pour allouer des canaux de communication à plusieurs utilisateurs dans un réseau, **caractérisé en ce qu'**il comporte un dispositif (30) configuré pour exécuter les étapes du procédé selon l'une des revendications 1 à 7.

**9.** Dispositif selon la revendication 8 **caractérisé en ce que** chaque utilisateur est équipé d'un processeur (12i) configuré pour exécuter les étapes du procédé selon l'une des revendications 1 à 7.

**10.** Dispositif selon l'une des revendications 8 ou 9 **caractérisé en ce qu'**un utilisateur est un poste radio et le réseau est un réseau de communication ad-hoc.

**Patentansprüche**

**1.** Verfahren zur Zuordnung logischer Kommunikationskanäle an N Benutzer in einem Netzwerk, mindestens folgende Schritte umfassend:

a) Definieren einer ersten Zuordnungsmenge, bestehend aus folgenden Tripletten (Kanal-Nummer, Slot-Nummer, einem Kanal für einen bestimmten Slot zugewiesener Benutzer), welche die Zuweisung von C Kommunikationskanälen für die N Benutzer über eine erste zeitliche Sitzung darstellen, bestehend aus mehreren Zeitabschnitten, wobei die Anzahl C an Kommunikationskanälen gleich der Quadratwurzel der Benutzeranzahl N ist und C gleich der Primzahlpotenz eines endlichen Körpers ist,
b) Erzeugen, anhand der ersten Kanalzuordnungsmenge, C anderer Matrizen, welche jeweils die Zuordnung der Benutzer an die Kommunikationskanäle während einer Sitzung beschreiben, wobei die C Zuordnungsmatrizen unter Verwendung einer Funktion erzeugt werden, welche konfiguriert ist, damit jeder Benutzer mit jedem der anderen N-l Benutzer mindestens einmal während des Rahmens in Kommunikation steht, welcher die C+1 Sitzungen zusammenfasst, wobei die Kommunikation tatsächlich stattfindet, wenn die Benutzer in Kommunikationsreichweite sind.

**2.** Verfahren nach Anspruch 1, **dadurch gekennzeichnet, dass** die Zuordnungsgruppe sich in Form einer Matrix darstellt und dadurch, dass die Erzeugung einer Zuordnungsmatrix anhand der ersten Zuordnungsmatrix erzielt wird, indem die Spalten und die Zeilen der Matrix durchlaufen werden, unter Verwendung von Geraden mit unterschiedlichem Gefälle.

**3.** Verfahren nach einem der Ansprüche 1 oder 2, **dadurch gekennzeichnet, dass** in dem Fall, in dem die Beziehung $C = \sqrt{N}$ nicht bewahrheitet ist, man eine Anzahl an inaktiven Benutzern wählt, und man N'>N aktive oder inaktive Benutzer verarbeitet, wobei $C = \sqrt{N'}$, und man die Position der inaktiven Benutzer optimiert, um die Größe des Rahmens zu minimieren.

**4.** Verfahren nach einem der Ansprüche 1 bis 3, **dadurch gekennzeichnet, dass** in dem Fall, in dem die Anzahl an verfügbaren Kanälen kleiner als die Quadratwurzel der Benutzerzahl ist, man die Benutzer in Teilgruppen von maximal k Benutzern zusammenfasst, wobei $(k-1)*q^2 < N <= k*q^2$, wobei q die Anzahl der verfügbaren Kanäle ist.

**5.** Verfahren nach Anspruch 4, **dadurch gekennzeichnet, dass** eine Gruppe von Benutzern aus mehreren Teilgruppen von Benutzern besteht, wie beispielsweise Paaren, Tripletten und/oder einzelnen Benutzern.

**6.** Verfahren zur gemeinsamen Datennutzung zwischen mehreren Benutzern, umfassend den Schritt der Zuordnung der Kommunikationskanäle nach einem der Ansprüche 1 bis 5 und einen Schritt, bei welchem die Benutzer ihre Positionen und die Positionen ihrer Nachbarn in Funkreichweite austauschen.

**7.** Verfahren nach Anspruch 6, **dadurch gekennzeichnet, dass** die Benutzer Funkstationen sind.

**8.** Vorrichtung für die Zuweisung von Kommunikationskanälen an mehrere Benutzer in einem Netzwerk, **dadurch gekennzeichnet, dass** sie eine Vorrichtung (30) umfasst, welche konfiguriert ist, um die Schritte des Verfahrens nach einem der Ansprüche 1 bis 7 auszuführen.

9. Vorrichtung nach Anspruch 8, **dadurch gekennzeichnet, dass** jeder Benutzer mit einem Prozessor (12i) ausgerüstet ist, welcher konfiguriert ist, um die Schritte des Verfahrens nach einem der Ansprüche 1 bis 7 auszuführen.

10. Vorrichtung nach einem der Ansprüche 8 oder 9, **dadurch gekennzeichnet, dass** ein Benutzer eine Funkstation ist und das Netzwerk ein ad hoc-Kommunikationsnetzwerk ist.

**Claims**

1. Method for allocating communication logic channels to N users in a network, having at least the following steps:

   a) defining a first allocation set composed of the following triplets (channel number, slot number, user attributed to a channel for a given slot) representing the allocation of C communication channels, to the N users, in a first time session composed of multiple time slots, with the number C of communication channels equal to the square root of the number of users N and C equal to the cardinal of a finite field,
   b) generating, from the first channel allocation set, C other matrices, each matrix describing the allocation of the users to the communication channels during a session, said C allocation matrices being generated using a function configured so that each user is in communication with each of the other (N-1) users at least once during the frame containing the C+1 sessions, the communication actually taking place if the users are within communication range.

2. Method according to claim 1, **characterized in that** the allocation set takes the form of a matrix and **in that** an allocation matrix is generated from the first allocation matrix by scanning the columns and rows of the matrix using straight lines of variable slopes.

3. Method according to either of claims 1 and 2, **characterized in that** in the case where the relationship $C = \sqrt{N}$ is not satisfied, a number of inactive users is chosen and N'>N active or inactive users, with $C = \sqrt{N'}$, are treated and the position of the inactive users is optimized to minimize the size of the frame.

4. Method according to one of claims 1 to 3, **characterized in that**, in the case where the number of available channels is lower than the square root of the number of users, the users are grouped together into subgroups of at most k users with $(k-1)*q^2 < N <= k*q^2$ where q is the number of available channels.

5. Method according to claim 4, **characterized in that** a group of users is composed of multiple subsets of users, such as pairs, triplets and/or single users.

6. Method for sharing data between multiple users, comprising the step of allocating communication channels according to one of claims 1 to 5 and a step in which the users exchange their positions and the positions of their neighbors in radio range.

7. Method according to claim 6, **characterized in that** the users are radio equipment.

8. Device for allocating communication channels to multiple users in a network, **characterized in that** it has a device (30) configured to execute the steps of the method according to one of claims 1 to 7.

9. Device according to claim 8, **characterized in that** each user is equipped with a processor (12i) configured to execute the steps of the method according to one of claims 1 to 7.

10. Device according to one of claims 8 or 9, **characterized in that** a user is a radio equipment and the network is an ad-hoc communication network.

FIG.1

FIG.2

## FIG.3

**M1**
```
0  11 22 33 44 55 66 77 88 99  110
1  12 23 34 45 56 67 78 89 100 111
2  13 24 35 46 57 68 79 90 101 112
3  14 25 36 47 58 69 80 91 102 113
4  15 26 37 48 59 70 81 92 103 114
5  16 27 38 49 60 71 82 93 104 115
6  17 28 39 50 61 72 83 94 105 116
7  18 29 40 51 62 73 84 95 106 117
8  19 30 41 52 63 74 85 96 107 118
9  20 31 42 53 64 75 86 97 108 119
10 21 32 43 54 65 76 87 98 109 120
```

**M2**
```
0  12 24 36 48 60 72 84 96 108 120
1  13 25 37 49 61 73 85 97 109 110
2  14 26 38 50 62 74 86 98 99  111
3  15 27 39 51 63 75 87 88 100 112
4  16 28 40 52 64 76 77 89 101 113
5  17 29 41 53 65 66 78 90 102 114
6  18 30 42 54 55 67 79 91 103 115
7  19 31 43 44 56 68 80 92 104 116
8  20 32 33 45 57 69 81 93 105 117
9  21 22 34 46 58 70 82 94 106 118
10 11 23 35 47 59 71 83 95 107 119
```

**M12**
```
0   1   2   3   4   5   6   7   8   9   10
11  12  13  14  15  16  17  18  19  20  21
22  23  24  25  26  27  28  29  30  31  32
33  34  35  36  37  38  39  40  41  42  43
44  45  46  47  48  49  50  51  52  53  54
55  56  57  58  59  60  61  62  63  64  65
66  67  68  69  70  71  72  73  74  75  76
77  78  79  80  81  82  83  84  85  86  87
88  89  90  91  92  93  94  95  96  97  98
99  100 101 102 103 104 105 106 107 108 109
110 111 112 113 114 115 116 117 118 119 120
```

## FIG.4

**M1**
```
0  11 22 33 44 55 66 77 88 99
1  12 23 34 45 56 67 78 89 100
2  13 24 35 46 57 68 79 90 101
3  14 25 36 47 58 69 80 91 102
4  15 26 37 48 59 70 81 92 103
5  16 27 38 49 60 71 82 93 104
6  17 28 39 50 61 72 83 94 105
7  18 29 40 51 62 73 84 95 106
8  19 30 41 52 63 74 85 96 107
9  20 31 42 53 64 75 86 97 108
10 21 32 43 54 65 76 87 98 109
```

**M2**
```
0  12 24 36 48 60 72 84 96 108
1  13 25 37 49 61 73 85 97 109
2  14 26 38 50 62 74 86 98 99
3  15 27 39 51 63 75 87 88 100
4  16 28 40 52 64 76 77 89 101
5  17 29 41 53 65 66 78 90 102
6  18 30 42 54 55 67 79 91 103
7  19 31 43 44 56 68 80 92 104
8  20 32 33 45 57 69 81 93 105
9  21 22 34 46 58 70 82 94 106
10 11 23 35 47 59 71 83 95 107
```

**M12**
```
0  1  2  3  4  5  6  7  8  9  10
11 12 13 14 15 16 17 18 19 20 21
22 23 24 25 26 27 28 29 30 31 32
33 34 35 36 37 38 39 40 41 42 43
44 45 46 47 48 49 50 51 52 53 54
55 56 57 58 59 60 61 62 63 64 65
66 67 68 69 70 71 72 73 74 75 76
77 78 79 80 81 82 83 84 85 86 87
88 89 90 91 92 93 94 95 96 97 98
99 100 101 102 103 104 105 106 107 108 109
```

10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160094244 A

**Littérature non-brevet citée dans la description**

- **ZHANG HONGLIANG et al.** Radio Resource Allocation for Device-to-Device Underlay Communication Using Hypergraph Theory. *IEEE Transactions on Wireless Communications*